# EUROPÄISCHE PATENTSCHRIFT

(11) **EP 1 311 420 B1**
(45) Veröffentlichungstag und Bekanntmachung des Hinweises auf die Patenterteilung: **19.05.2004**
(21) Anmeldenummer: 01958066.1
(22) Anmeldetag: 10.08.2001
(51) Int. Cl.: B61H 13/00, B60T 17/08, B60T 17/22

(54) **ANZEIGEVORRICHTUNG FÜR EINE NOTLÖSEEINRICHTUNG FÜR FEDERSPEICHERBREMSEN SOWIE FEDERSPEICHERBREMSE MIT EINER ANZEIGEVORRICHTUNG, INSBESONDERE FÜR SCHIENENFAHRZEUGE**
DISPLAY DEVICE FOR AN EMERGENCY RELEASE DEVICE FOR SPRING-LOADED BRAKES AND A SPRING-LOADED BRAKE COMPRISING A DISPLAY DEVICE, ESPECIALLY FOR RAIL VEHICLES
SYSTEME D'AFFICHAGE DESTINE A UN DISPOSITIF DE DECLENCHEMENT D'URGENCE DE FREINS A ACCUMULATION ET FREIN A ACCUMULATION COMPORTANT UN SYSTEME D'AFFICHAGE, NOTAMMENT DESTINE A DES VEHICULES SUR RAILS

(30) Priorität: 10.08.2000 DE 10039161
(43) Veröffentlichungstag der Anmeldung: 21.05.2003
(73) Patentinhaber: KNORR-BREMSE Systeme für Schienenfahrzeuge GmbH, 80809 München (DE)
(72) Erfinder: KERSCHER, Albert, 85386 Eching (DE); WOLFSTEINER, Peter, 80797 München (DE); THIESS, Manfred, 86609 Donauwörth (DE)
(86) Internationale Anmeldenummer: PCT/EP2001/009290
(87) Internationale Veröffentlichungsnummer: WO 2002/012046

(56) Entgegenhaltungen:
- EP-A- 0 654 387
- DE-U- 29 710 118
- GB-A- 1 403 653
- US-A- 4 793 449

## Beschreibung

Die vorliegende Erfindung betrifft eine Bremseinrichtung, insbesondere für Schienenfahrzeuge, beinhaltend eine Anzeigevorrichtung für eine Notlöseeinrichtung einer Federspeicherbremse zur Rückmeldung des Ist-Zustandes der Notlöseeinrichtung bei einer von Hand zu betätigenden Betätigungseinrichtung der Notlöseeinrichtung, die über ein mechanisches Kraftübertragüngsglied mit der Federspeicherbremse gekoppelt ist, wobei das mechanische Kraftübertragungsglied zugleich zur Übertragung der Information über den Ist-Zustand der Federspeicherbremse dient und die Anzeigevorrichtung nach dem Oberbegriff des Anspruchs 1.

Die aus der Praxis bekannten Notlöseeinrichtungen für ebenfalls aus der Praxis bekannte Federspeicherbremsen dienen zur von Hand ausgelösten Notlösung einer solchen Federspeicherbremse, um beispielsweise ein Schienenfahrzeug, wie z.B. ein Waggon, ein Triebwagen oder gar ein gesamter S-Bahn-Zugverband beispielsweise aus einer Park- oder Abrüstposition heraus schleppend oder schiebend beiseite rangieren zu können. Dabei wird die Notlöseeinrichtung mittels einer Betätigungseinrichtung, die sich direkt am Federspeicher befindet, durch Aufbringen einer Zugkraft von üblicherweise 15 kg bis 20 kg, teilweise sogar bis zu 30 kg, durch ein Bahnbetrietispersonal von Hand notgelöst. Das Bahnbetriebspersonal, das einen solchen Notlösevorgang von Hand ausführt, hat dabei, bis auf eine schwache akustische Rückmeldung, die als ein vom Federspeicherpaket verursachtes Klacken vernehmbar ist, sofern dies durch allfällig auftretende Nebengeräusche nicht bereits unmöglich ist, keine zuverlässige Rückmeldung über den Ist-Zustand der Federspeicherbremse und damit keine Kontrolle darüber, ob die Federspeicherbremse nun notgelöst oder nicht-notgelöst ist.

Erschwerend kommt hinzu, daß aus der Praxis Fälle bekannt geworden sind, bei denen die Notlöseeinrichtung von Hand betätigt wurde, die aufgebrachte Zugkraft jedoch nicht ausreichte, um die Federspeicherbremse erfolgreich zu lösen, und das Bedienpersonal in der festen Überzeugung, die Notlöseeinrichtung betätigt zu haben, den betreffenden Waggon zum Verschieben freigegeben hat

Aus dem Stand der Technik sind Anzeigen des Notlöse-Zustandes direkt am Bremsgerät selbst bekannt geworden. Eine gattungsgemäße Bremseinrichtung ist in der EP-A-0654387 offenbart, bei welcher die Anzeigeeinrichtung und die Betätigungseinrichtung direkt an einem Gehäuse der Federspeicherbremse befestigt sind, wobei das Kraftübertragungsglied durch einen starren, auf das Anzeigeelement wirkenden Balken gebildet ist. Diese Anordnung hat den Nachteil, dass die Anzeigeeinrichtung aufgrund der direkten Anbringung an der oft an unzugänglichen Stellen angeordneten Federspeicherbremse nicht zuverlässig ablesbar ist. Darüber hinaus liefert die Anzeigevorrichtung eine falsche information im Falle eines Defekts oder Abrisses des Kraftübertragungsglieds. Denn kann nach einem vorangehenden Notlösen der Federspeicherbremse sich die Anzeige weiterhin in Stellung "notgelöst" befinden, obwohl die Federspeicherbremse inzwischen bereits wieder in Zuspannstellung gebracht wurde. Letzteres Problem ergibt sich auch bei der Bremseinrichtung. gemäß der US-A-4 793 449, bei welcher das Anzeigeelement in eine den notgelösten Zustand repräsentierende Stellung vorgespannt ist, so dass bei einem Defekt der Anzeigeeinrichtung oder der Betätigungseinrichtung ebenfalls die Gefahr besteht, dass der Zustand "notgelöst" angezeigt wird, obwohl die Federspeicherbremse in Wahrheit nicht gelöst ist.

Dies walles zeigt, dass in Ermangelung einer korrekten Rückmeldung des Ist-Zustandes der Federspeicherbremse ein Schienenfahrzeug trotz vermeintlich notgelöster Federspeicherbremse eben doch mit nicht-notgelöster Federspeicherbremse in gebremstem Zustand verschoben werden kann, was zu einem Verglühen der Bremsscheiben und der Bremsbeläge führt. Denn ein Lokführer kann beim Rangieren eines Waggons oder eines größeren Zugverbandes nicht erkennen, ob alle Federspeicherbremsen nun tatsächlich gelöst oder einzelne davon möglicherweise nicht gelöst sind. Darüber hinaus können bei nur teilweise notgelösten Federspeicherbremsen bei längeren Rangierwegen irreparable Schäden an den Bremsscheiben, Belägen oder Zuspanneinheiten auftreten, die dann einen entsprechend teuren, vorzeitigen Austausch dieser Bremsenkomponenten notwendig machen.

Der vorliegenden Erfindung liegt demgegenüber die Aufgabe zugrunde, eine Bremseinrichtung der eingangs erwähnten Art derart weiter zu entwickeln, dass die vorgenannten Nachteile vermieden werden.

Erfindungsgemäß wird diese Aufgabe durch die Merkmale von Anspruch 1 gelöst.

Bei der erfindungsgemäßen Bremseinrichtung wird zur Rückmeldung des Ist-Zustandes der Notlöseeinrichtung der Federspeicherbremse bei einer von Hand zu bedienenden Betätigungseinrichtung der Notlöseeinrichtung, die ihrerseits über ein einziges mechanisches Kraftübertragungsglied mit der Federspeicherbremse gekoppelt ist, vorgeschlagen, die Anzeigevorrichtung und die Betätigungseinrichtung von der Federspeicherbremse entfernt anzubringen. Damit wird es in vorteilhafter Weise möglich, eine Anzeigevorrichtung zusammen mit der Betätigungseinrichtung anstelle direkt neben der Federspeicherbremse beispielsweise am Aufbau des Schienenfahrzeuges, am Wagenkasten oder sogar innerhalb eines Waggons unter- bzw. anzubringen. Somit kann ein Bahnbediensteter die Betätigungseinrichtung aufgrund deren erstmalig leichter Erreichbarkeit bequem bedienen. Zudem kann er deren Anzeigevorrichtung zugleich unabhängig von Witterungs- und Beleuchtungsverhältnissen genau und zuverlässig ablesen.

Weil darüber hinaus das Anzeigeelement der Anzeigevorrichtung durch an ihm angreifende Federmittel in eine einen nicht notgelösten Zustand repräsentierende Stellung vorgespannt ist, ist auch im Falle eines Defekts des Kraftübertragungsglieds, in welchem der tatsächliche Ist-Zustand der Federspeicherbremse nicht mehr angezeigt wird, sichergestellt, dass die Anzeigevorrichtung auf nicht-notgelöst gestellt bleibt, so dass ein versehentliches Verschieben eines Fahrzeugs mit zugespannten Bremsen in vorteilhafter Weise auch dann ausgeschlossen werden kann. Insbesondere weil die Federmittel direkt am Anzeigeelement angreifen, sorgt die Federkraft in jedem Fall für eine Rückstellung in die Anzeigeposition "nicht notgelöst".

Weiterhin wird in vorteilhafter Weise Vorgeschlagen, daß das mechanische Kraftübertragungsglied zugleich zur Rück-Übertragung der Information über den Ist-Zustand der Notlöseeinrichtung der Federspeicherbremse herangezogen wird und daß das mechanische Kraftübertragungsglied die Anzeigevorrichtung beeinflußt. Auf diese Weise wird die Anzahl der für die erfindungsgemäße Anzeigevorrichtung notwendigen baulichen Komponenten möglichst klein gehalten, was sowohl Herstellungskosten sparen hilft als auch deren Montage vereinfacht. Darüber hinaus bietet insbesondere die Nutzung des mechanischen Kraftübertragungsgliedes zur Rückmeldung der Ist-Zustandsinformation eine absolut zuverlässige Rückmeldung, die störungsunanfällig und ausfallfrei arbeitet, da sie weder auf das Vorhandensein von pneumatischem Druck noch auf ein Anliegen einer Versorgungsspannung angewiesen ist. Sollte im äußersten Extremfall das mechanische Kraftübertragungsglied aufgrund eines Defektes ausfatlen, kann damit weder die Notlöseeinrichtung betätigt noch eine Reaktion des Federspeichers zurückgemeldet werden, was infolge der Beeinflussung der Anzeigevorrichtung durch das mechanische Kraftübertragungsglied dazu führt, daß die Anzeige auf nicht-notgelöst gestellt bleibt, so daß ein versehentliches Verschieben eines Fahrzeuges mit angelegten Bremsen in vorteilhafter Weise auch dann ausgeschlossen werden kann. Zudem kann die erfindungsgemäße Anzeigevorrichtung aufgrund ihrer einfachen Bauweise auch bei extremen Witterungsbedingungen, wie sie beispielsweise in nordischen Ländern auftreten, nicht einfrieren oder schwergängig werden. Damit ist auch bei schlechten Witterungsverhältnissen ein zuverlässiges Funktionieren garantiert. Die erfindungsgemäße Anzeigevorrichtung verharrt bis zu einer Notlösung in der Anzeigestellung nicht notgelöst Nach einer erfolgreichen Notlösung der Federspeicherbremse verharrt die Anzeigevorrichtung dabei in vorteilhafter Weise solange im betätigten, sprich notgelösten Zustand, bis wieder ein ausreichender Betriebsdruck auf die Federspeicherbremse gegeben wird. Diese verändert damit ihren Ist-Zustand von notgelöst auf nicht-notgelöst und bewirkt in Folge dessen durch die Änderung des Ist-Zustandes und die Rückmeldung dieser Veränderung durch das mechanische Kraftübertragungsglied zur Anzeigevorrichtung eine entsprechend nachfolgende Umstellung der Anzeige von zuvor notgelöst auf nicht-notgelöst.

Vorteilhafte Weiterbildungen der Erfindung ergeben sich aus den Merkmalen der Unteransprüche.

So kann das mechanische Kraftübertragungsglied beispielsweise ein Gestänge, eine Hebelmechanik, ein Bowdenzug, eine Kombination hieraus oder dergleichen sein. Insbesondere ein Bowdenzug bietet dabei neben den, allen mechanischen Kraftübertragungsgliedem gemeinsamen Vorteilen eines einfachen, robusten, kostengünstigen und zuverlässigen Aufbaus, den weiteren Vorteil, daß Bowdenzüge nicht zum Einfrieren neigen, ein Wassereintritt in die am einen Ende des Bowdenzugs angekoppelte Betätigungseinrichtung als auch in die am anderen Ende angekoppelte Federspeicherbremse weitestgehend ausgeschlossen ist und Bowdenzüge überlicherweise ausfallsicher sind. Darüber hinaus können auf diese Weise störanfällige Bauteile wie elektronische oder pneumatische Sensoren, Schalter, Stellglieder, Kabel oder Druckluftleitungen zur Übertragung des Ist-Zustand-Signales entfallen, was einer gesteigerten Ausfallsicherheit zugute kommt und zugleich hilft, einen ansonsten erheblichen zusätzlichen Integrationsaufwand hinsichtlich der einzubauenden, systemfremden Baugruppen zu vermeiden.

Ferner kann die Anzeigevorrichtung in vorteilhafter Weise als ein aus dem Gehäuse der Betätigungseinrichtung heraustretender Anzeigestift ausgebildet sein. Dies bietet den Vorteil einer ständig korrekten Ablesbarkeit. Selbst bei extrem schlechten Sichtverhältnissen könnte ein Bahnbediensteter zumindest durch Tasten unterscheiden, ob die Federspeicherbremse, die zuvor über die Betätigungseinrichtung notgelöst wurde, tatsächlich notgelöst ist. Denn im notgelösten Zustand steht der Anzeigestift über das Gehäuse der Betätigungseinrichtung hervor und kann damit leicht erfühlt werden. Andernfalls steht dieser Anzeigestift nicht hervor und ein nichtnotgelöster-Zustand kann auf diese Weise ebenfalls selbst im Dunkeln zweifelsfrei ertastet werden.

Daneben sind auch andere Alternativen zur Visualisierung des Ist-Zustandes der Federspeicherbremse in der Anzeigevorrichtung denkbar. So könnte beispielsweise eine Scheibe von grün auf rot und wieder zurück umspringen, je nach Zustand der Federspeicherbremse. Oder ein Zeiger könnte seine Stellung von nicht-notgelöst nach notgelöst und wieder zurück verändern.

Weiterhin wird in vorteilhafter Weise vorgeschlagen, daß die Betätigungseinrichtung ein mittels eines Drehhebels betätigbares Drehglied aufweist. Das betätigbare Drehglied kann dabei über einen an diesem befindlichen Zapfen durch einen darauf passenden Schlüssel bzw. Drehhebel, den das Bahnbetriebspersonal ohnehin mit sich führt, ohne zusätzliches Werkzeug betätigt werden, wobei zugleich sichergestellt ist, daß nicht autorisierte Personen in Ermangelung eines solchen passenden Drehhebels die Betätigungseinrichtung nicht bedienen können. Dabei ist weiter vorgesehen, daß das Drehglied die als Drehbewegung eingeleitete Handkraft in eine auf das mechanische Kraftübertragungsglied einwirkende Zugkraft übersetzt. Die bei einer ersten Ausführungsform im wesentlichen quer zur Zugrichtung erfolgende Verschiebung des Anzeigestiftes wird in Abhängigkeit von einer Längsverschiebung des mechanischen Kraftübertragungsgliedes in Richtung der Zugkraft bewirkt. Bei einer weiteren Ausführungsform wird der Anzeigestift ausschließlich vom Drehglied betätigt, wobei diese Betätigung beispielsweise über eine Spiralfläche erfolgen kann. Dabei erfolgt die Verriegelung des Anzeigestiftes durch die Längsverschiebung des mechanischen Kraftübertragungsgliedes. Dies bietet in vorteilhafter Weise eine Entkopplung der Bewegungsrichtungen des mechanischen Kraftübertragungsgliedes und des vom mechanischen Kraftübertragungsglied zur Rückübertragung des Ist-Zustand-Signals angesprochenen Anzeigestiftes, so daß bei einem über das Gehäuse hervor tretenden Anzeigestift bei einer notgelösten Federspeicherbremse beispielsweise bei einem mutwilligen Beschädigen des Anzeigestiftes keine Rückkoppelung von auf diesen Stift eingeleiteter äußerer Kräfte auf das mechanische Kraftübertragungsglied erfolgen kann. Im schlimmsten Fall kann der Anzeigestift aufgrund einer solchen mutwilligen Beschädigung zerbrechen, ohne daß die notgelöste Federspeicherbremse deshalb in einen nicht-notgelösten Zustand zurückkehren könnte.

Weiterhin schafft die vorliegende Erfindung erstmals eine Anzeigevorrichtung zur Visualisierung des Ist-Zustandes der Notlöseeinrichtung der Federspeicherbremse, bei der die notgelöste Federspeicherbremse solange notgelöst bleibt, bis vom System des Waggons oder des Zugverbandes zur vollständigen Erlangung der Wiederbereitschaft ein entsprechender Druck in der Federspeicherbremse aufgebaut wird. Eine ungewollte Freigabe der Nötlöseeinrichtung bereits bei einer teilweisen Wiederbereitschaft ist damit ausgeschlossen. Somit ist in vorteilhafter Weise sichergestellt, daß eine einmal betätigte Notlöseeinrichtung einerseits zu einem zuverlässigen Notlösen der Federspeicherbremse führt und andererseits eine zuverlässige Anzeige des Ist-Zustandes notgelöst ermöglicht und darüber hinaus zum dritten ein Verbleiben der Federspeicherbremse im notgelösten Zustand garantiert ist.

Nach einer erfolgreichen Notlösung der Federspeicherbremse verharrt die Anzeigevorrichtung dabei in vorteilhafter Weise solange im betätigten, sprich notgelösten Zustand, bis wieder ein ausreichender Betriebsdruck auf die Federspeicherbremse gegeben wird. Diese verändert damit ihren Ist-Zustand von notgelöst auf nicht-notgelöst und bewirkt in Folge dessen durch die Änderung des Ist-Zustandes und die Rückmeldung dieser Veränderung durch das mechanische Kraftübertragungsglied zur Anzeigevordchtung eine entsprechend nachfolgende Umskellung der Anzeige von zuvor notgelöst auf nicht-notgelöst.

Weitere Einzelheiten, Aspekte und Vorteile der vorliegenden Erfindung ergeben sich aus der nachfolgenden Diskussion beispielhafter Ausführungsformen unter Bezugnahme auf die Zeichnung.

Es zeigt:
- Fig. 1: eine schematische Skizze einer Ausführungsform einer Federspeicherbremse einer erfindungsgemäßen Bremseinrichtung;
- Fig. 2: eine schematische Skizze des prinzipiellen Aufbaus einer Betätigungseinrichtung und deren Anzeigevorrichtung;
- Fig. 3: eine schematische Skizze des prinzipiellen Aufbaus einer erfindungsgemäßen Federspeicherbremse mit der Ankopplung derselben an das mechanische Kraftübertragungsglied; und
- Fig. 4: einen Schnitt A-A entlang der in Fig. 3 angedeuteten Schnittlinie A-A senkrecht zur dortigen Bildebene.

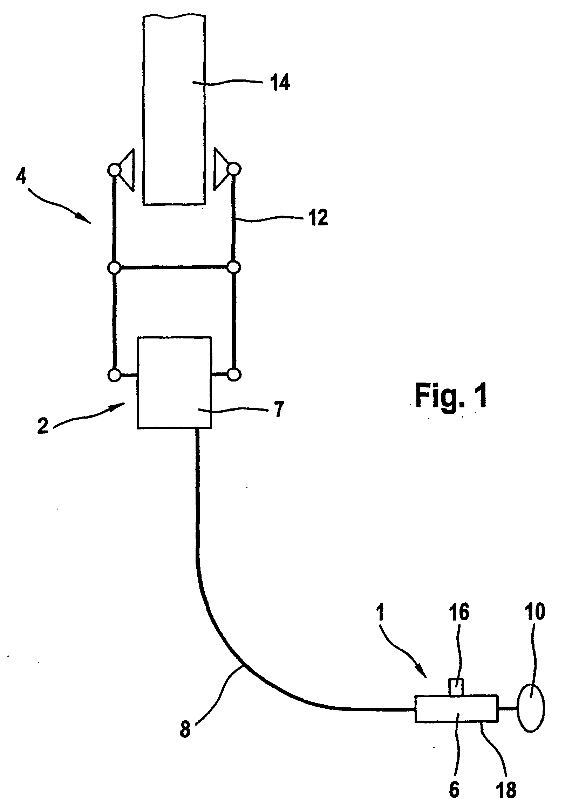

In Fig. 1 ist vermittels einer Handskizze eine erfindungsgemäße Anzeigevorrichtung 1 für eine Notlöseeinrichtung 2 für Federspeicherbremsen 4, insbesondere für Schienenfahrzeuge, zur Rückmeldung des Ist-Zustandes der Federspeicherbremse 4 bei einer von Hand zu betätigenden Betätigungseinrichtung 6 der Notlöseeinrichtung 2, die über ein mechanisches Kraftübertragungsglied 8 mit der Federspeicherbremse 4 gekoppelt ist, dargestellt. Die Anzeigevorrichtung 1 und die Betätigungseinrichtung 6 sind von der Federspeicherbremse 4 entfernt angebracht. Das mechanische Kraftübertragungsglied 8 dient zugleich zur Übertragung der Information über den Ist-Zustand der Federspeicherbremse 4 und betätigt die Anzeigevorrichtung 1.

In der hier skizzierten Ausführungsform weist die Betätigungseinrichtung 6 einen Handgriff 10 auf. Das mechanische Kraftübertragungsglied 8, mit dem eine dem Handgriff 10 aufgeprägte Zugkraft von 15 kg bis 20 kg auf die Notlöseeinrichtung 2 übertragen wird, ist hier als Bowdenzug ausgeführt. Die Notlöseeinrichtung 2 wirkt dabei mit der Federspeicherbremse 4 in bekannter, deshalb nicht näher diskutierter Weise mittels beispielsweise einer Bremszange 12 auf eine Bremsscheibe 14. Die Anzeigevorrichtung 1 ist hier beispielsweise als Anzeigestift 16 ausgebildet, der bei einem notgelösten Zustand der Federspeicherbremse 4 über das Gehäuse 18 der Betätigungseinrichtung 6 übersteht und damit den Ist-Zustand notgelöst jederzeit, beispielsweise durch tasten, schauen oder fühlen, klar erkennbar anzeigt.

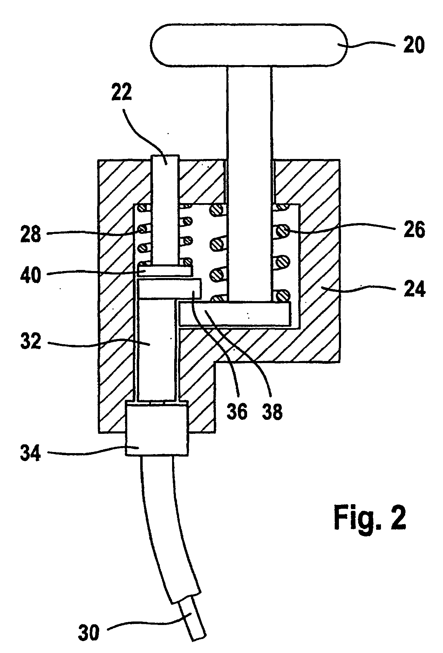

In Fig. 2 ist anhand einer schematischen Skizze des prinzipiellen Aufbaus einer erfindungsgemäßen Betätigungseinrichtung mit deren Anzeigevorrichtung deren Wirkungsweise näher erläutert. Ein Hebel 20 und ein Anzeigestift 22 sind in einem Gehäuse 24 mittels der Federn 26 und 28 federvorgespannt gelagert und stehen in Wirkverbindung mit dem mechanischen Kraftübertragungsglied 30, das hier als Bowdenzug ausgebildet ist. Dessen anzeigevorrichtung-zugewandtes Ende ist über geeignete Haltemittel 34 am Gehäuse 24 der Anzeigevorrichtung befestigt und steht über eine entsprechende Auskragung 36 in Wirkverbindung mit einer am Hebel 20 befindlichen Schulter 38. Ferner stützt sich der Anzeigestift 22 mit seinem dem Ende 32 des mechanischen Kraftübertragungsgliedes 30 zugewandten Ende 40 auf dem Ende 32 des Bowdenzugs ab. Wird nun durch Zug von Hand eine Kraft auf den Hebel 20 aufgebracht, überträgt dieser die Handkraft über dessen Schulter 38 auf die Auskragung 36 des Bowdenzugs 30 der damit auf den nicht näher dargestellte Notlöseeinrichtung einwirken kann. Zugleich wird der Anzeigestift 22 aus seiner Ruhelage angehoben und tritt aus dem Gehäuse 24 heraus und wird damit sicht- und tastbar.

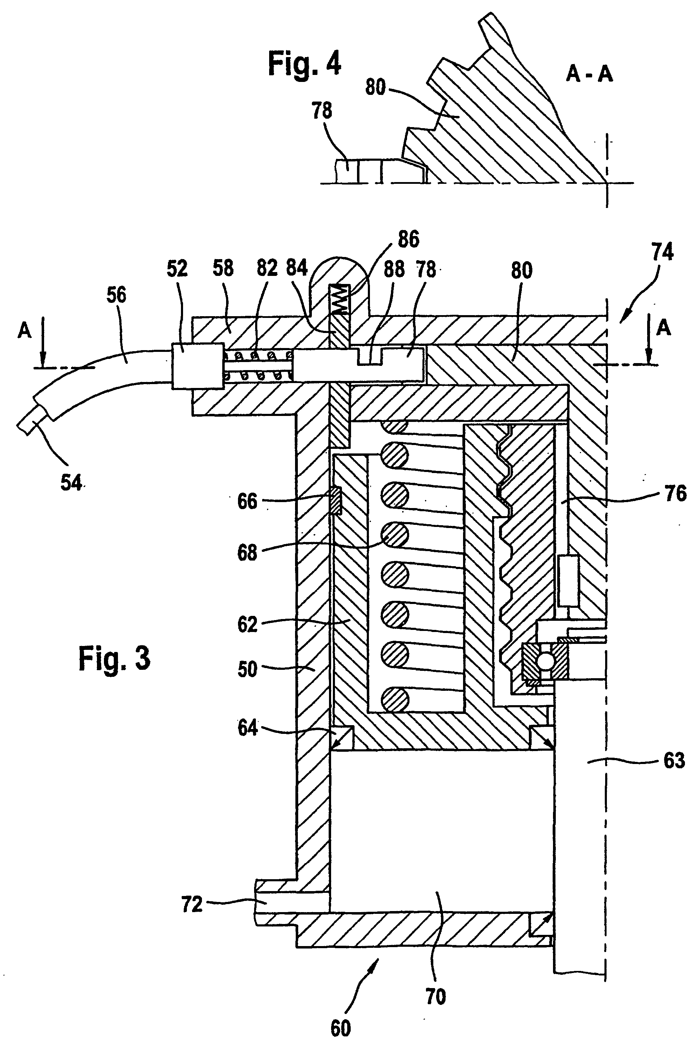

Weiterhin ist in Fig. 3 vermittels einer schematischen Skizze des prinzipiellen Aufbaus einer erfindungsgemäßen Federspeicherbremse mit deren Ankopplung an das mechanische Kraftübertragungsglied deren grundsätzliches Zusammenspiel näher beschrieben. Am Gehäuse 50 einer Notlöseeinrichtung für eine Federspeicherbremse ist das Ende 52 eines als Bowdenzug 54 ausgebildeten mechanischen Kraftübertragungsglieds 56 in einer entsprechend ausgebildeten Aufnahme 58 befestigt. Im Gehäuse 50 des Federspeicherzylinders 60 ist ein Federspeicherkolben 62 axial verschiebbar angeordnet, an dessen Außenumfang Dichtungen und Gleitbänder 64 und 66 verteilt sind. Zwischen dem Federspeicherkolben 62 und dem Deckel des Gehäuses 50 ist eine Federspeicherfeder 68 angeordnet. Ein Druckraum 70 ist zwischen dem Federspeicherkolben 62 und dem Gehäuse 50 ausgebildet, welche über einen Luftanschluß 72 mit Druck beaufschlagbar ist. Die Federspeicherbremse kann durch be- und entlüften über den Luftanschluß 72 gelöst und zugespannt werden. Wenn sich der Federspeicher nicht im notgelösten Betriebszustand befindet, setzt sich die Kraft der Federspeicherfeder 68 über den Federspeicherkolben 62 entweder auf den Druckraum bzw. auf das Druckvolumen 70 oder über eine Kolbenstange 63 am Federspeicherkolben 62 auf der sonst nicht näher dargestellten Bremseinrichtung ab.

Zum Lösen der eingelegten Federspeicherbremse auch ohne Druckluft weist der Federspeicherzylinder 60 eine Notlöseeinrichtung 74 auf, der ein Unterbrechen des Kraftflusses zwischen Federspeicherkolben 62 und Kolbenstange 63 ermöglicht.

Im dargestellten Beispiel basiert die Notlöseeinrichtung 74 bzw. der Notlösemechanismus 74 im wesentlichen auf der Funktion einer Spindelanordnung 76 mit einer Sperrklinke 78. Das resultierende Drehmoment der Spindelanordnung wird im gesperrten Zustand auf ein Zahnrad 80 übertragen, das von der Sperrklinke 78 verriegelbar ist, oder freigegeben werden kann (vgl. Fig. 4). Das eine Ende der Sperrklinke 78 greift dazu in einer der Betriebsstellungen der Notlöseeinrichtung in das Zahnrad 80 ein. Das andere Ende der Sperrklinke 78 ist mittels dem hier als Bowdenzug 54 ausgebildeten mechanischen Kraftübertragungsglied 56 aus der Verzahnung des Zahnrads 80 hebbar, so daß dessen Drehung in dieser Stellung der Sperrklinke 78 freigegeben ist. Dadurch kann der Kraftfluß zwischen dem Federspeicherkolben 62 und der Kolbenstange 63 unterbrochen werden. Die Sperrklinke 78 ihrerseits ist mittels einer Klinkenfeder 82 federvorgespannt in Richtung auf die Verzahnung des Zahnrads 80.

Liegt nun an der Kolbenstange 63 eine Bremskraft bzw. Federkraft an, und wird die Notlöseeinrichtung betätigt, so kommt es zu einer Drehung der Gewindespindel 76, so daß sich die Bremskraft abbaut und der Federspeicherkolben am Gehäuse 50 anschlägt. Um ein erneutes Verriegeln der Sperrklinke 78 während des Lösevorgangs zu verhindern ist ein Riegel 84 angeordnet, der die ausgehobene Sperrklinke 78 zurückhält. Der Riegel 84 ist seinerseits im Gehäuse gelagert und mittels einer Feder 86 vorgespannt. Diese drückt den Riegel 84 in Richtung auf die Sperrklinke 78 und sorgt dafür, daß dieser in einer der Betriebsstellungen in eine seitliche, gestufte Ausnehmung 88 der Sperrklinke 78 zur Aufnahme des Riegels 84 eingreift und die Sperrklinke 78 in ihrer Lösestellung verriegelt. Erst wenn sich der Federspeicherkolben 62 nach einem Notlösevorgang wieder in einer betriebsbereiten Stellung befindet, gibt der Riegel 84 die Sperrklinke 78 erneut zum Einrasten frei.

Zuletzt ist in Fig. 4 in einem Schnitt durch den in Fig. 3 schematischen Aufbau einer erfindungsgemäßen Federspeicherbremse mit Notlöseeinrichtung das Zusammenwirken von Sperrklinke 78 und Zahnrad 80 erkennbar.

Die vorliegende Erfindung schafft somit erstmals eine Anzeigevorrichtung für eine Notlöseeinrichtung für Federspeicherbremsen, insbesondere für Schienenfahrzeüge wie beispielsweise Waggons, Zugwagen, Triebwagen, Lokomotiven oder Güterwagen, zur Rückmeldung des Ist-Zustandes der Notlöseeinrichtung einer Federspeicherbremse bei einer von Hand zu betätigenden Betätigungseinrichtung der Notlöseeinrichtung. Dabei ist die Federspeicherbremse mit der Betätigungseinrichtung über ein mechanisches Kraftübertragungsglied gekoppelt. Die Anzeigevorrichtung und die Betätigungseinrichtung sind von der Federspeicherbremse entfernt angebracht und damit für ein Bahnbedienpersonal jederzeit bequem zugänglich und leicht ablesbar. Das mechanische Kraftübertragungsglied dient nicht nur zur Übertragung der Betätigungskraft auf die Federspeicherbremse sondern zugleich zur Rückmeldung der Information über den Ist-Zustand der Federspeicherbremse und dient weiterhin zur Beeinflussung der Anzeigevorrichtung. Ferner wird mit der vorliegenden Erfindung erstmals eine Federspeicherbremse vorgeschlagen, insbesondere für Schienenfahrzeuge, die eine Notlöseeinrichtung und eine der Betätigungseinrichtung zugeordnete Anzeigevorrichtung aufweist. Mit der Anzeigevorrichtung kann erstmals der Ist-Zustand der Notlöseeinrichtung der Federspeicherbremse jederzeit zuverlässig und verwechslungssicher bestimmt bzw. angezeigt werden. Dabei bleibt die notgelöste Federspeicherbremse in vorteilhafter Weise solange gelöst, bis wieder ein ausreichender Druck vom System bzw. vom Schienenfahrzeug auf die Federspeicherbremse gegeben wird.

### Bezugszeichenliste:

- 1: Anzeigevorrichtung
- 2: Notlöseeinrichtung
- 4: Federspeicherbremse
- 6: Betätigungseinrichtung
- 8: Kraftübertragungsglied
- 10: Handgriff
- 12: Bremszange
- 14: Bremsscheibe
- 16: Anzeigestift
- 18: Gehäuse
- 20: Hebel
- 22: Anzeigestift
- 24: Gehäuse
- 26: Feder
- 28: Feder
- 30: Kraftübertragungsglied
- 32: Ende von 30
- 34: Haltemittel
- 36: Auskragung
- 38: Schulter
- 40: Ende von 22
- 50: Gehäuse
- 52: Ende von 56
- 54: Bowdenzug
- 56: Kraftübertragungsglied
- 58: Aufnahme
- 60: Federspeicherzylinder
- 62: Federspeicherkolben
- 63: Kolbenstange
- 64: Dichtungen
- 66: Gleitbänder
- 68: Federspeicherfeder
- 70: Druckraum
- 72: Luftanschluß
- 74: Notlöseeinrichtung
- 76: Spindelanordnung
- 78: Sperrklinke
- 80: Zahnrad
- 82: Klinkenfeder
- 84: Riegel

## Patentansprüche

1. Bremseinrichtung, insbesondere für Schienenfahrzeuge, beinhaltend eine Anzeigevorrichtung (1) für eine Notlöseeinrichtung (2, 74) einer Federspeicherbremse (4, 60) zur Rückmeldung des ist-Zustandes der Notlöseeinrichtung (2, 74) bei einer von Hand zu betätigenden Betätigungseinrichtung (6) der Notlöseeinrichtung (2, 74), die über ein mechanisches Kraftübertragungsglied (8, 30, 54) mit der Federspeicherbremse (4,60) gekoppelt ist, wobei das mechanische Kraftübertragungsglied (8, 30, 54) zugleich zur Übertragung der Information über den Ist-Zustand der Federspeicherbremse (4, 60) dient und die Anzeigevorrichtung (1) betätigt, **dadurch gekennzeichnet, daß** die Anzeigevorrichtung (1) und die Betätigungseinrichtung (6) von der Federspeicherbremse (4, 60) entfernt angebracht sind und ein Anzeigeelement (16, 22) der Anzeigevorrichtung (1) durch an ihm abgestützte Federmittel (28) in eine einen nicht notgelösten Zustand repräsentierende Stellung vorgespannt ist.

2. Bremsvorrichtung nach Anspruch 1, **dadurch gekennzeichnet,** da**ß** das mechanische Kraftübertragungsglied (8, 30, 54) ein Gestänge, eine Hebelmechanik, ein Bowdenzug oder eine Kombination hieraus ist.

3. Bremsvorrichtung nach Anspruch 1 oder 2, **dadurch gekennzeichnet,** da**ß** die Anzeigevorrichtung (1) ein aus einem Gehäuse (18, 24) der Betätigungseinrichtung (6) heraustretender Anzeigestift (16, 22) ist.

4. Bremsvorrichtung nach Anspruch 3, **dadurch gekennzeichnet,** da**ß** der Anzeigestift (16, 22) in dem Gehäuse (18, 24) der Betätigungseinrichtung fedenrorgespannt gelagert ist.

5. Bremsvorrichtung nach einem der Ansprüche 1 bis 4, **dadurch gekennzeichnet, daß** die Betätigungseinrichtung (6) ein mittels eines Drehhebels betätigbares Drehglied aufweist, weiches einerseits die als Drehbewegung eingeleitete Handkraft in eine auf das mechanische Kraftübertragungsglied (8, 30, 54) einwirkende Zugkraft übersetzt, und andererseits eine im wesentlichen quer zur Zugrichtung erfolgende Verschiebung des Anzeigestiftes (16, 22) in Abhängigkeit von einer Längsverschiebung des mechanischen Kraftübertragungsgliedes (8, 30, 54) in Richtung der Zugkraft bewirkt.

6. Bremseinrichtung nach einem der Ansprüche 1 bis 5, **dadurch gekennzeichnet, daß** die Federspeicherbremse (4, 60) als druckmittelbetätigte Federspeicherbremse und derart ausgebildet ist, daß sie bis zum Aufbau eines entsprechenden Drucks gelöst bleibt.

## Claims

1. Brake device, particularly for rail vehicles, including an indicator device (1) for an emergency release device (2, 74) of a spring-loaded brake (4, 60) for recording the actual state of the emergency release device (2, 74) with an operating device (6), to be operated by hand, of the emergency release device (2, 74), the emergency release device (2, 74) being connected to the spring-loaded brake (4, 60) by means of a power transmission member (8, 30, 54), whereby the mechanical power transmission member (8, 30, 54) both serves to transmit the information on the current state of the spring-loaded brake (4, 60) and operate the indicator device (1), **characterized in that** the indicator device (1) and the operating device (6) are attached at a separation from the spring-loaded brake (4, 60) and an indicator element (16, 22) of the indicator device (1) is pre-tensioned in a setting representing an unreleased state by means of a spring element (28) that is supported on it.

2. Brake device in accordance with claim 1, **characterized in that** the mechanical transmission member (8, 30, 54) is a rod, a lever mechanism, a Bowden cable or a combination of these.

3. Brake device in accordance with claim 1 or 2, **characterized in that** the indicator device (1) is an indicator pin (16, 22) coming out of a casing (18, 24) of the operating device (6).

4. Brake device in accordance with claim 3, **characterized in that** the indicator pin (16, 22) is supported under spring loading in the casing (18, 24) of the operating device.

5. Brake in accordance with one of claims 1 to 4, **characterized in that** the operating device (6) has a rotation member which can be operated by means of a rotation lever and which on the one hand converts the hand power introduced as a rotational movement into a traction acting on the mechanical power transmission member (8, 30, 54), and which also causes a displacement of the indicator pin (16, 22), essentially transversely in relation to the direction of pulling, on the basis of a longitudinal displacement of the mechanical power transmission member (8, 30, 54) in the direction of the traction.

6. Brake device in accordance with one of claims 1 to 5, **characterized in that** the spring-loaded brake (4, 60) is developed as a pressure-medium operated spring-loaded brake, such that it remains released until a relevant pressure is introduced.

## Revendications

1. Dispositif de freinage, notamment pour des véhicules sur rails, comportant un système (1) d'affichage pour un dispositif (2, 74) de desserrage d'urgence d'un frein (4, 60) à ressort accumulateur donnant en retour une information sur l'état réel du dispositif (2, 74) de desserrage d'urgence pour un dispositif (6) d'actionnement à la main du dispositif (2, 74) de desserrage d'urgence, qui est couplé par un élément (8, 30, 54) mécanique de transmission de forces au frein (4, 60) à ressort accumulateur, l'élément (8, 30, 54) mécanique de transmission de forces servant en même temps à transmettre l'information sur l'état réel du frein (4, 60) à ressort accumulateur et actionnant le système (1) d'affichage, **caractérisé en ce que** le système (1) d'affichage et le dispositif (6) d'actionnement sont disposés à distance du frein (4, 60) à ressort accumulateur et un élément (16, 22) d'affichage du système (1) d'affichage est mis dans une position représentant un état non desserré en cas d'urgence, sous précontrainte, par des moyens (28) élastiques qui s'y appuient.

2. Dispositif de freinage suivant la revendication 1, **caractérisé en ce que** l'élément (8, 30, 54) mécanique de transmission de forces est une tringlerie, une mécanique à levier, un câble Bowden ou une de leurs combinaisons.

3. Dispositif de freinage suivant la revendication 1 ou 2, **caractérisé en ce que** le système (1) d'affichage est une broche (16, 22) d'affichage sortant d'un boîtier (18, 24) du dispositif (10) d'actionnement.

4. Dispositif de freinage suivant la revendication 3, **caractérisé en ce que** la broche (16, 22) d'affichage est montée en étant précontrainte par un ressort dans le boîtier (18, 24) du dispositif d'actionnement.

5. Dispositif de freinage suivant l'une des revendications 1 à 4, **caractérisé en ce que** le dispositif (6) d'actionnement comporte un élément tournant qui peut être actionné au moyen d'un levier tournant, qui, d'une part, transforme la force manuelle appliquée sous la forme d'un mouvement de rotation en une force de traction agissant sur l'élément (8, 30, 54) mécanique de transmission de forces et qui, d'autre part, provoque, en fonction d'un déplacement longitudinal de l'élément (8, 30, 54) mécanique de transmission de forces dans la direction de la force de traction un déplacement, s'effectuant sensiblement transversalement à la direction de traction, de la broche (16, 22) d'affichage.

6. Dispositif de freinage suivant l'une des revendications 1 à 5, **caractérisé en ce que** le frein (4, 60) à ressort accumulateur est constitué sous la forme d'un frein à ressort accumulateur actionné par un fluide comprimé et de façon à ce qu'il reste desserré jusqu'à l'établissement d'une pression adéquate.
